# EUROPÄISCHE PATENTANMELDUNG

(11) **EP 1 761 112 A2**
(43) Veröffentlichungstag der Anmeldung: **07.03.2007**
(21) Anmeldenummer: 06018139.3
(22) Anmeldetag: 30.08.2006
(51) Int. Cl.: H05B 41/28, H05B 41/282

(54) **Potenzialtrennung für SEPIC-Wandler**

(30) Priorität: 30.08.2005 DE 202005013674 U
(71) Anmelder: Patent-Treuhand-Gesellschaft für elektrische Glühlampen mbH, 81543 München (DE)
(72) Erfinder: Busse, Olaf, 80686 München (DE); Heckmann, Markus, 511495 Guanzhou (CN); Lecheler, Reinhard, 86633 Neuburg/Donau (DE); Lechner, Alfons, 86558 Hohenwart (DE); Mayer, Siegfried, 85452 Moosinning (DE); Pollischansky, Thomas, 81543 München (DE); Rudolph, Bernd, 85659 Forstern (DE); Schemmel, Bernhard, 82234 Wessling (DE); Schmidtmann, Kay, Dr., 81827 München (DE); Schmitt, Harald, 80689 München (DE); Siegmund, Thomas. Dr., 83624 Otterfing (DE); Storm, Arwed, 85221 Dachau (DE); Werni, Horst, 80937 München (DE)

(57) **Zusammenfassung**

Die vorliegende Erfindung bezieht sich auf ein elektronisches Vorschaltgerät mit einem SEPIC-Wandler (L1, C1, DS1, S1, L2) zum Betrieb einer Lampe, insbesondere einer Entladungslampe, speziell einer Niederdruckentladungslampe (LA). Das elektronische Vorschaltgerät weist neben dem SEPIC-Kondensator (C1) einen zweiten Trennungskondensator (C2) auf, welcher Gleichstrom durch das elektronische Vorschaltgerät unterbindet und die Verwendung geringerer Klemmenspannungen - bezogen auf das Erdpotential - ermöglicht.

## Beschreibung

### Technisches Gebiet

Die vorliegende Erfindung bezieht sich auf ein elektronisches Vorschaltgerät mit einem SEPIC-Wandler zum Betrieb einer Lampe, insbesondere einer Entladungslampe, speziell einer Niederdruckentladungslampe.

### Stand der Technik

Elektronische Vorschaltgeräte zum Betrieb von Lampen sind bekannt. Üblicherweise enthalten sie eine Gleichrichterschaltung zur Gleichrichtung einer Wechselspannungsversorgung und Aufladen eines häufig als Zwischenkreiskondensator bezeichneten Kondensators. Die an dem Zwischenkreiskondensator anliegende Gleichspannung dient zur Versorgung eines Inverters, der die Lampe betreibt. Der Inverter erzeugt aus der Gleichspannung eine Versorgungsspannung für die mit hochfrequentem Strom zu betreibende Lampe.

Oft enthalten elektronische Vorschaltgeräte einen Wandler zur Leistungsfaktorkorrektur, beispielsweise einen SEPIC-Wandler. Mit einem SEPIC-Wandler kann der Zwischenkreiskondensator aufgeladen werden, der den nachfolgenden Inverter mit Gleichspannung versorgt. Dabei wird mittels des SEPIC-Wandlers vermieden, dass der Zwischenkreiskondensator aus der Wechselspannungsversorgung nur dann geladen wird, wenn der momentane Spannungswert der Wechselspannungsversorgung höher ist als die an dem Zwischenkreiskondensator anliegende Spannung. Damit werden kurzzeitige pulsartige Aufladeströme in der Umgebung der Spannungsmaxima der Wechselspannungsversorgung vermieden, aus denen sich regelmäßig ein unzulässig starkes Oberwellenspektrum und ein schlechter Leistungsfaktor ergeben.

SEPIC-Wandler haben gegenüber anderen Wandlerkonzepten, etwa im Vergleich zu Hochsetzstellern, den Vorteil, dass die Ausgangsspannung des Wandlers in relativ weiten Grenzen beliebig eingestellt werden kann. Das Schaltungskonzept des SEPIC-Wandlers ist dem Fachmann geläufig und muss daher hier nicht im Einzelnen dargestellt werden. Ergänzend wird jedoch auf die verschiedenen Erläuterungen im weiteren Verlauf dieser Beschreibung verwiesen.

### Darstellung der Erfindung

Der vorliegenden Erfindung liegt das technische Problem zugrunde, ein verbessertes elektronisches Vorschaltgerät mit einem SEPIC-Wandler anzugeben.

Die Erfindung bezieht sich auf ein elektronisches Vorschaltgerät zum Betrieb einer Lampe mit einem Gleichrichter zur Versorgung des elektronischen Vorschaltgerätes aus einer Wechselspannung, mit einem Inverter zur Versorgung der Lampe mit einer hochfrequenten Wechselspannung, mit einem Zwischenkreiskondensator zur Gleichspannungsversorgung des Inverters und mit einem SEPIC-Wandler zum Laden des Zwischenkreiskondensators, welcher SEPIC-Wandler aufweist
- eine zwischen einen ersten Gleichrichterausgang und den Zwischenkreiskondensator geschaltete Serienschaltung aus einer ersten Spule, einem SEPIC-Kondensator und einer Diode,
- ein an den Verbindungsknoten zwischen der ersten Spule und dem SEPIC-Kondensator parallel zu dem Zwischenkreiskondensator geschaltetes Schaltelement
- und eine an den Verbindungsknoten zwischen dem SEPIC-Kondensator und der Diode parallel zu dem Zwischenkreiskondensator geschaltete zweite Spule,
dadurch gekennzeichnet, dass das elektronische Vorschaltgerät einen zwischen das Schaltelement und die zweite Spule, parallel zu dem SEPIC-Kondensator, an einen zweiten Gleichrichterausgang angeschlossenen, geschalteten Trennungskondensator aufweist.

Bevorzugte Ausgestaltungen der Erfindung sind in den abhängigen Ansprüchen angegeben und werden im Folgenden näher erläutert.

Die Erfindung basiert zunächst auf der Erkenntnis, dass eine Potentialtrennung in elektronischen Vorschaltgeräten wünschenswert ist, weil dadurch Schädigungen des elektronischen Vorschaltgerätes oder Gefährdungen einer Person weniger wahrscheinlich sind. Beispielsweise sinkt mit einer Potentialtrennung das Risiko, das elektronische Vorschaltgerät zu zerstören, wenn eine Netzversorgung an den Lampenanschlüssen angeschlossen wird und nicht an dem an sich dafür vorgesehenen Eingang des Vorschaltgerätes.

Das elektronische Vorschaltgerät wird über eine Wechselspannungsversorgung betrieben und ist oft nicht mit dem Erdpotential verbunden. Das Potential an den Gleichrichterausgängen zeigt gegenüber dem Erdpotential einen charakteristischen Verlauf, der hier am Beispiel des Vollbrückengleichrichters dargestellt wird.

Während jeder zweiten Halbwelle der Netzversorgung folgt die Potentialdifferenz zwischen jeweils einem der Ausgänge des Gleichrichters und Erde dem ursprünglichen Verlauf der Wechselspannungsversorgung, bis auf eine vergleichsweise kleine Abweichung verursacht durch einen Spannungsabfall im Gleichrichter selber. Insbesondere entspricht die Amplitude dieser Schwingung etwa der Amplitude der Wechselspannungsversorgung. Während der dazwischen liegenden Netzhalbwellen entspricht die Potentialdifferenz zwischen einem der Ausgänge und der Erde einer Konstanten. Die Phasen mit konstanter Potentialdifferenz zum Erdpotential sind dabei für beide Gleichrichterausgänge um 180 Grad phasenverschoben. Dass die Potentialdifferenz zwischen einem der Gleichrichterausgänge und der Erde zeitweise dem Wechselspannungsversorgungsverlauf folgt, gilt für alle üblichen Gleichrichtertypen.

Die zwei Gleichrichterausgänge entsprechen zwei Gleichspannungseingängen des SEPIC-Wandlers. Der SEPIC-Kondensator ist über die erste Spule mit dem ersten Gleichrichterausgang verbunden. Über dem SEPIC-Kondensator fällt ein großer Teil der gleichgerichteten Wechselspannung ab. Bei einem elektronischen Vorschaltgerät nach dem Stand der Technik mit gekoppelten Spulen des SEPIC-Wandlers entspricht die Amplitude der über dem SEPIC-Kondensator abfallenden Spannung der Amplitude der gleichgerichteten Wechselspannungsversorgung (bis auf die bereits erwähnten kleinen Spannungsabfälle im Gleichrichter).

Ein erfindungsgemäßes elektronisches Vorschaltgerät weist einen zwischen das Schaltelement und die zweite Spule sowie parallel zu dem SEPIC-Kondensator geschalteten, an den zweiten Gleichrichterausgang angeschlossenen Trennungskondensator auf. Ein Teil der gleichgerichteten Wechselspannung fällt nun über diesem Trennungskondensator ab. Die Amplitude der Spannung über dem SEPIC-Kondensator ist nun geringer als bei einem elektronischen Vorschaltgerät nach dem Stand der Technik.

Der Potentialverlauf an der dem Gleichrichterausgang abgewandten Seite des Trennungskondensators wird nun einerseits durch das Potential auf der dem Gleichrichtereingang zugewandten Seite bestimmt, dessen zeitlicher Verlauf identisch ist mit dem weiter oben beschriebenen Verlauf des Potentiales an einem Gleichrichterausgang, und der über dem Trennungskondensator abfallenden gleichgerichteten Wechselspannung. Insgesamt ergibt sich so eine Wechselspannung zwischen der dem Gleichrichterausgang abgewandten Seite des Trennungskondensators und Erde. Der Effektivwert dieser Wechselspannung ist kleiner als der Effektivwert der Spannung zwischen dem trennungskondensatorseitigen Gleichrichterausgang und Erde. Damit ist auch die effektive Spannung zwischen dem versorgungspotentialseitigen Lampenanschluss und Erde verringert, was sich positiv auf die Personensicherheit und die notwendigen Isolationsmaßnamen auswirkt.

Bei einer bevorzugten Ausführungsform der Erfindung ist der Gleichrichter ein Vollbrückengleichrichter. Vollbrückengleichrichter sind günstig und einfach zu realisieren.

Vorzugsweise sind die erste Spule und die zweite Spule des SEPIC-Wandlers über ein gemeinsamen Kern miteinander gekoppelt. Werden bestimmte Bedingungen in der Abstimmung der Induktivitäten eingehalten, so kann mit einer solchen Kopplung eine so genannte und dem Fachmann bekannte Ripplestromkompensation durchgeführt werden.

Bei einer bevorzugten Ausführungsform der Erfindung weicht die Kapazität des SEPIC-Kondensators um nicht mehr als 10% von der Kapazität des Trennungskondensators ab. Werden die Kapazitäten der beiden Kondensatoren entsprechend gewählt und sind die Spulen des SEPIC-Wandlers gekoppelt, so fällt ein signifikanter Teil der gleichgerichteten Wechselspannung an dem Trennungskondensator ab und der Verlauf der Wechselspannung zwischen der dem Gleichrichterausgang abgewandten Seite des Trennungskondensators und dem Erdpotential weist vergleichbare Amplituden für beide Polaritäten auf, d.h. sie ist besonders symmetrisch um ihren Mittelwert und ihr Effektivwert ist besonders gering. Zunehmend bevorzugt sind Ausführungsformen der Erfindung, bei denen die Kapazität des SEPIC-Kondensators um nicht mehr als 8%, 5%, 3%, 1 % von der Kapazität des Trennungskondensators abweicht.

Üblicherweise ist zwischen einen Wechselspannungsausgang des Inverters und eines seiner Versorgungspotentiale eine Serienschaltung aus einer Lampendrossel, einem Koppelkondensator und den Lampenanschlüssen geschaltet. Der Koppelkondensator stellt dabei sicher, dass an der angeschlossenen Lampe während des Betriebes eine reine Wechselspannung anliegt.

Eine bevorzugte Ausführungsform der Erfindung weist die eben beschriebene Serienschaltung aus der Lampendrossel, dem Koppelkondensator und den Lampenanschlüssen auf, wobei der Koppelkondensator zwischen dem Wechselspannungsausgang des Inverters und dem wechselspannungsausgangsseitigen Anschluss der Lampe liegt. Im Stand der Technik ist der Koppelkondensator oft zwischen eines der Versorgungspotentiale des Inverters und den versorgungspotentialseitigen Lampenanschluss geschaltet, so dass der versorgungspotentialseitige Lampenanschluss auf dem durch den Koppelkondensator eingestellten Potential, üblicherweise dem halben Versorgungspotential des Inverters, liegt. Bei dieser Ausführungsform der Erfindung liegt der versorgungspotentialseitige Lampenanschluss jedoch auf dem Potential der gleichrichterausgangsabgewandten Seite des Trennungskondensators. Diese Ausführungsform der Erfindung führt zu einer weiter erniedrigten effektiven Spannung zwischen Erde und dem versorgungspotentialseitigen Lampenanschluss.

Vorzugsweise weist das elektronische Vorschaltgerät einen Resonanzkondensator auf, welcher zu einer Serienschaltung aus dem Koppelkondensator und den Lampenanschlüssen parallel geschaltet ist, wobei der Koppelkondensator näher an dem Wechselspannungsausgang liegt als die Lampenanschlüsse. Bei einer solchen Schaltung fließt nur der Strom durch den Koppelkondensator, welcher auch durch die angeschlossene Lampe während des Betriebes fließt. Daher kann der Koppelkondensator entsprechend klein ausgelegt sein.

Bei einer bevorzugten Ausführungsform der Erfindung ist die Lampe eine Entladungslampe, insbesondere eine Niederdruckentladungslampe.

Üblicherweise weist der Inverter zur Versorgung der Lampe mit einem hochfrequenten Wechselstrom Schaltelemente auf, beispielsweise bei einem Halbbrückeninverter zwei Schaltelemente. Der SEPIC-Wandler weist auch ein Schaltelement auf. Es gibt verschiedene Möglichkeiten, die in dem elektronischen Vorschaltgerät vorhandenen Schaltelemente zu steuern.

Eine bevorzugte Ausführungsform der Erfindung sieht eine Steuerschaltung zur Ansteuerung der Schaltelemente vor, welche zumindest einen Optokoppler aufweist. Ein Optokoppler erlaubt die Übermittlung von Steuersignalen bei - insbesondere auch großen - Potentialunterschieden. Diese Eigenschaft kann bei einem erfindungsgemäßen elektronischen Vorschaltgerät vorteilhaft genutzt werden. Eine Steuerschaltung zur Ansteuerung mehrerer oder aller Schaltelemente kann auf eines der möglichen Bezugspotentiale innerhalb des elektronischen Vorschaltgerätes zurückgreifen und mittels eines Optokopplers ohne weiteres auch ein Schaltelement steuern, dessen Potential zum Bezugspotential der Steuerschaltung einen großen Unterschied aufweist.

Eine Lampe wird mittels eines passenden elektronischen Vorschaltgerätes betrieben. Elektronische Vorschaltgeräte und Lampen werden dabei sowohl einzeln vertrieben, als auch als Sätze aus einem elektronischen Vorschaltgerät und einer passenden Lampe. Dabei können das elektronische Vorschaltgerät und die Lampe sowohl trennbare Einheiten darstellen, als auch als eine baulich integrierte Einheit dargeboten werden, wie beispielsweise bei Energiesparlampen üblich. Oft betreibt ein elektronisches Vorschaltgerät aber nicht nur eine Lampe, sondern gleich mehrere Lampen, beispielsweise eine Reihenschaltung aus Leuchtstofflampen. Ein Satz aus einem elektronischen Vorschaltgerät oder einer bzw. mehreren passenden Lampen wird hier als Lampensystem bezeichnet. Die Erfindung betrifft auch solche Lampensysteme.

Eine bevorzugte Ausführungsform eines Lampensystems weist eine Serienschaltung aus zumindest zwei, gemeinsam mit dem Vorschaltgerät betreibbaren Lampen auf. Zum Betrieb einer Serienschaltung mehrerer Lampen müssen größere Spannungen verwendet werden als beim Betrieb einer Lampe. Damit sind auch die Spannungen zwischen Erde und den Lampenanschlüssen besonders hoch. Die weiter oben beschriebenen Wirkungen der Erfindung können diese Spannungen in ihrem Effektivwert verringern.

Die vorstehende und die folgende Beschreibung der einzelnen Merkmale beziehen sich auf die Vorrichtungskategorie und auch auf ein der Erfindung entsprechendes Verfahren, ohne dass dies im Einzelnen noch explizit erwähnt wird.

Die Erfindung betrifft also grundsätzlich auch ein Verfahren zum Betrieb einer Lampe durch ein elektronisches Vorschaltgerät, welches mittels eines Gleichrichters aus einer Wechselspannung versorgt wird, wobei die Lampe über einen Inverter mit einer hochfrequenten Wechselspannung versorgt wird und ein Zwischenkreiskondensator den Inverter mit einer Gleichspannung versorgt und ein SEPIC-Wandler den Zwischenkreiskondensator aus einem ersten Gleichrichterausgang lädt, welcher SEPIC-Wandler aufweist, eine zwischen den ersten Gleichrichterausgang und den Zwischenkreiskondensator geschaltete Serienschaltung aus einer ersten Spule, einem SEPIC-Kondensator und einer Diode, ein an den Verbindungsknoten zwischen der ersten Spule und dem SEPIC-Kondensator parallel zu dem Zwischenkreiskondensator geschaltetes Schaltelement und einer an den Verbindungsknoten zwischen dem SEPIC-Kondensator und der Diode parallel zu dem Zwischenkreiskondensator geschaltete zweite Spule, dadurch gekennzeichnet, dass der Gleichrichterausgang und der Wechselspannungsausgang des elektronischen Vorschaltgerätes durch einen zwischen das Schaltelement und die zweite Spule, parallel zu dem SEPIC-Kondensator, an einen zweiten Gleichrichterausgang angeschlossenen, geschalteten Trennungskondensator galvanisch getrennt werden. Weiter bezieht sich die Erfindung auch auf die vorstehend und nachfolgend implizit auch für dieses Verfahren erläuterten Ausgestaltungen.

### Kurze Beschreibung der Zeichnungen

Im Folgenden soll die Erfindung anhand von Ausführungsbeispielen näher erläutert werden. Die dabei offenbarten Einzelmerkmale könnten auch in anderen Kombinationen erfindungswesentlich sein.
- Figur 1: zeigt ein Schaltungsdiagramm eines elektronischen Vorschaltgerätes nach dem Stand der Technik.
- Figur 2: zeigt ein Schaltungsdiagramm eines erfindungsgemäßen elektronischen Vorschaltgerätes.
- Figur 3: zeigt zeitliche Verläufe einiger relevanter Potentiale.
- Figur 4: zeigt einen Ausschnitt aus einem Schaltungsdiagramm einer bevorzugten Ausführungsform eines erfindungsgemäßen elektronischen Vorschaltgerätes.

### Bevorzugte Ausführung der Erfindung

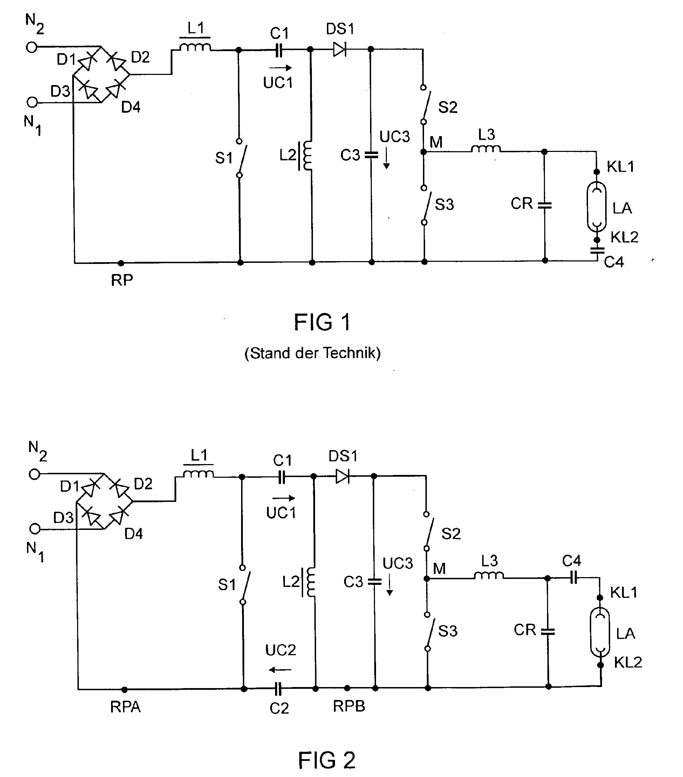

Figur 1 zeigt ein elektronisches Vorschaltgerät nach dem Stand der Technik mit einer angeschlossenen Niederdruckentladungslampe LA. Links sieht man zwei Wechselspannungseingänge N1 und N2 des elektronischen Vorschaltgerätes. An diese kann eine Versorgungsspannung, hier ein gewöhnliches Haushaltsnetz, angeschlossen werden. Die Versorgungsspannung wird mittels eines Vollbrückengleichrichter aus Dioden D1 - D4 gleichgerichtet. Der Vollbrückengleichrichter D1 - D4 weist zwei Ausgänge für die gleichgerichtete Wechselspannung auf, einen unteren, dessen Potential als Bezugspotential RP gewählt ist, und einen oberen Ausgang. Zwischen den oberen Ausgang des Gleichrichters D1 - D4 und das Bezugspotential RP ist eine Serienschaltung aus einer ersten Spule L1, einem SEPIC-Kondensator C1, einer Diode DS1 und einem Zwischenkreiskondensator C3 geschaltet. Zwischen den Verbindungsknoten zwischen dem SEPIC-Kondensator C1 und der Diode DS1 und das Bezugspotential RP ist eine zweite Spule L2 geschaltet. Die beiden Spulen L1 und L2 sind über einen gemeinsamen Kern K miteinander gekoppelt. Zwischen den Verbindungsknoten zwischen der ersten Spule L1 und dem SEPIC-Kondensator C1 und das Bezugspotential RP ist ein Schaltelement S1 geschaltet. Der SEPIC-Kondensator wird gebildet aus der ersten Spule L1, dem SEPIC-Kondensator C1, der Diode DS1, dem Schaltelement S1 und der zweiten Spule L2.

Der Zwischenkreiskondensator C3 versorgt einen Halbbrückeninverter S2, S3 mit einer Gleichspannung. Der Halbbrückeninverter S2, S3 weist zwei Schaltelemente (hier: MOSFET) S2 bzw. S3 auf. An dem Verbindungsknoten zwischen den Schaltelementen S2 und S3 des Halbbrückeninverters befindet sich ein Wechselspannungsausgang M. Zwischen den Wechselspannungsausgang M des Halbbrückeninverters S2, S3 und das Bezugspotential RP ist eine Serienschaltung aus einer Lampendrossel L3, einem Lampenanschluss KL1, einer Niederdruckentladungslampe LA, einem Lampenanschluss KL2 und einem Koppelkondensator C4 geschaltet. Parallel zu der Serienschaltung aus Lampenanschluss KL1, Niederdruckentladungslampe LA, Lampenanschluss KL2 und Koppelkondensator C4 ist ein Resonanzkondensator CR geschaltet.

Der Zwischenkreiskondensator C3 zur Gleichspannungsversorgung des Halbbrückeninverters S2, S3 wird von dem SEPIC-Wandler L1, C1, DS1, S1, L2 aus der gleichgerichteten Wechselspannung auf eine möglichst konstante Gleichspannung aufgeladen. In seiner Eigenschaft als Leistungskorrekturschaltung sorgt der SEPIC-Wandler L1, C1, DS1, S1, L2 dafür, dass die Stromaufnahme aus dem Netz möglichst störungsfrei dem sinusförmigen Verlauf der Netzspannung nachgeführt wird.

Durch einen alternierenden Schaltbetrieb des Schaltelementes S1 wird die erste Spule L1 im Einschaltzustand aus der gleichgerichteten Wechselspannung auf einen bestimmten Strom aufgeladen und im Ausschaltzustand des Schaltelementes S1 in den SEPIC-Kondensator C1 entladen. Gleichermaßen wird die zweite Spule L2 in den Einschaltzeiten des Schaltelementes S1 aufgeladen und in den Ausschaltzeiten in den SEPIC-Kondensator C1 und in den Zwischenkreiskondensator C3 entladen. (Die Polung der Diode DS1 ist zu beachten.) Durch ein entsprechendes Tastverhältnis, also das Verhältnis zwischen den Einschaltzeiten und Ausschaltzeiten, und unter Berücksichtigung der angeschlossenen Last, insbesondere der Niederdruckentladungslampe LA, läst sich damit im Wesentlichen eine beliebige Gleichspannung an dem Zwischenkreiskondensator C3 einstellen, die insbesondere auch kleiner als die Amplitude der Netzspannung sein kann. In diesem Beispiel entspricht die Spannung über dem Zwischenkreiskondensator C3 dem Maximum der gleichgerichteten Wechselspannung. Eine typische Betriebsfrequenz eines SEPIC-Wandlers L1, C1, DS1, S1, L2 liegt im Bereich einiger 10 kHz bis etwa 200 kHz, hier 50 kHz.

Das Schaltungsdiagramm in Figur 2 zeigt ein erfindungsgemäßes elektronisches Vorschaltgerät mit angeschlossener Niederdruckentladungslampe LA. Das erfindungsgemäße elektronische Vorschaltgerät entspricht weitgehend dem elektronischen Vorschaltgerät nach dem Stand der Technik in Figur 1. Das in Figur 2 gezeigte Schaltungsdiagramm unterscheidet sich in zwei Punkten von dem Schaltungsdiagramm aus Figur 1.

Erstens ist zwischen das Schaltelement S1 und die Spule L2, parallel zu dem SEPIC-Kondensator C1, ein Trennungskondensator C2 geschaltet. Man beachte, dass damit kein für das gesamte elektronische Vorschaltgerät einheitliches Bezugspotential RP mehr zur Verfügung steht, sondern das links von dem Trennungskondensator C2 ein Bezugspotential RPA und rechts ein Bezugspotential RPB existiert.

Zweitens ist der Koppelkondensator C4 nicht mehr zwischen den versorgungspotentialseitigen Lampenanschluss KL2 und das Bezugspotential RP (Figur 1) geschaltet, sondern zwischen den wechselspannungsausgangseitigen Lampenanschluss KL1 und die Lampendrossel L3, wobei der Resonanzkondensator CR parallel zu der Serienschaltung aus Koppelkondensator C4, Lampenanschluss KL1, Niederdruckentladungslampe LA und Lampenanschluss KL2 geschaltet ist. Damit liegt der Lampenanschluss KL2 auf dem Bezugspotential RPB.

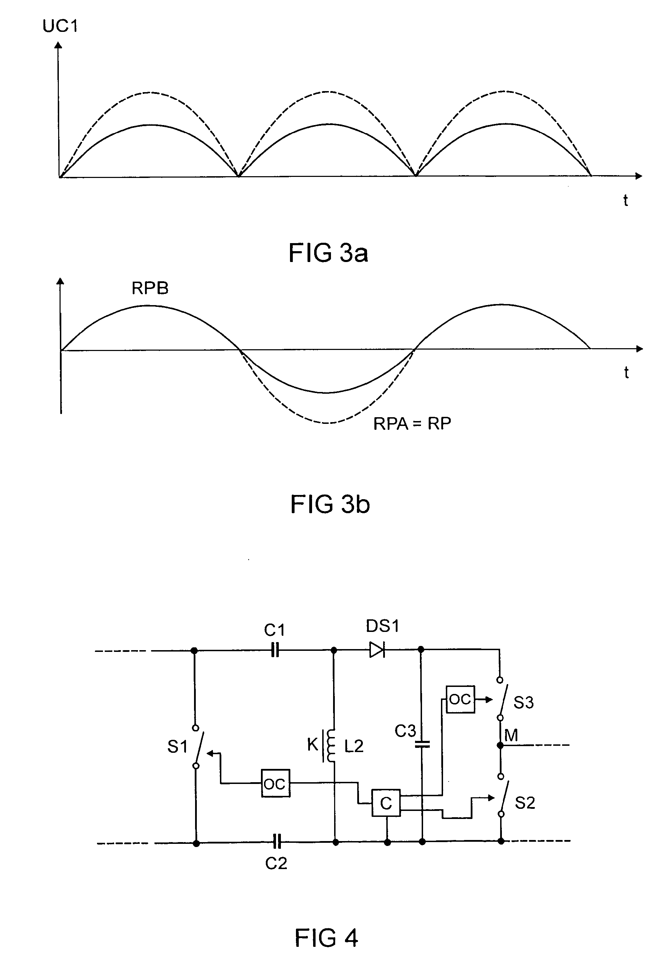

Figur 3 zeigt ausgewählte Spannungs- und Potentialverläufe in dem elektronischen Vorschaltgerät nach dem Stand der Technik (gestrichelte Linien) und in dem erfindungsgemäßen elektronischen Vorschaltgerät (durchgezogene Linien).

Figur 3a zeigt die über dem SEPIC-Kondensator C1 abfallende Spannung. Diese entspricht bei einem elektronischen Vorschaltgerät nach dem Stand der Technik im Wesentlichen der gleichgerichteten Wechselspannung (bis auf einen kleinen Teil der Spannung, der in dem Gleichrichter D1 - D4 abfällt). Bei dem erfindungsgemäßen elektronischen Vorschaltgerät fällt ein Teil der gleichgerichteten Wechselspannung an dem Trennungskondensator C2 ab. Sind die Kapazitäten des SEPIC-Kondensators und des Trennungskondensators gleich groß, wie in diesem Beispiel, so fällt an dem Trennungskondensator C2 die Hälfte der gleichgerichteten Wechselspannung ab. Dies ist der Fall, weil sich die über den gekoppelten Spulen L1 und L2 abfallenden Spannungen aufheben. Die Spannungen über C1 und C2 entsprechen also jeweils dem durchgezogenen Verlauf.

Die gestrichelte Linie in Figur 3b zeigt den zeitlichen Verlauf des Bezugspotentials RP bei dem elektronischen Vorschaltgerät nach dem Stand der Technik relativ zur Erde. In jeder zweiten Netzhalbwelle folgt der Verlauf des Bezugspotentials RP bezogen auf die Erde der ursprünglichen Netzspannungsversorgung, insbesondere auch mit im Wesentlichen gleicher Amplitude. Während der um 180° phasenverschobenen Netzhalbwellen ist das Bezugspotential RP bezüglich des Erdpotentiales eine Konstante.

Bei dem erfindungsgemäßen elektronischen Vorschaltgerät aus Figur 2 ist das Potential RPB durch den eben beschriebenen charakteristischen Verlauf des Potentials RPA (identisch mit RP aus Fig. 1) und die über dem Trennungskondensator C2 abfallende gleichgerichtete Wechselspannung bestimmt. Die Potentialdifferenz zwischen dem Bezugspotential RPB und Erde entspricht einer Wechselspannung. Die Amplitude dieser Wechselspannung entspricht nur der halben Amplitude der gleichgerichteten Wechselspannungsversorgung.

Ist der Koppelkondensator C4 zwischen den versorgungspotentialseitigen Lampenanschluss KL2 und das Versorgungspotential RP des Inverters S2, S3 geschaltet, wie in Figur 1 gezeigt, so stellt der Koppelkondensator C4 das Potential an dem Lampenanschluss KL2 auf die halbe Zwischenkreisspannung UC3 ein. Dies ist eine übliche Wahl. Damit ist die effektive Spannung zwischen dem Lampenanschluss KL2 und Erde jedoch relativ hoch.

Bei dem in Figur 2 gezeigten elektronischen Vorschaltgerät ist der Koppelkondensator C4 zwischen den wechselspannungsausgangsseitigen Lampenanschluss KL1 und den Wechselspannungsausgang M geschaltet, so dass das Bezugspotential RPB an dem Lampenanschluss KL2 anliegt.

Die effektive Lampenanschlussspannung bezüglich der Erde ist so bei einer Figur 2 entsprechenden Schaltungsanordnung durch zwei Effekte reduziert. Erstens trägt der Koppelkondensator C4 nicht mehr zu einem erhöhten Potential an dem Lampenanschluss KL2 bei und zweitens ist der Effektivwert der Spannung zwischen dem Bezugspotential RPB und Erde geringer als der Effektivwert der Spannung zwischen dem Bezugspotential RPA und Erde.

Figur 4 zeigt einen Ausschnitt aus einem Schaltdiagramm eines erfindungsgemäßen elektronischen Vorschaltgerätes. Im Unterschied zu Figur 2 ist eine Steuerschaltung C zur Ansteuerung der Schaltelemente S1, S2 und S3 eingezeichnet. Die Steuerschaltung C bezieht sich auf das Bezugspotential RPB. Das Schaltelement S2 in dem Halbbrückeninverter S2, S3 liegt auf dem gleichen Bezugspotential RPB und kann deshalb von der Steuerschaltung C ohne weitere Maßnahmen zur Potentialanpassung angesteuert werden.

Das andere in dem Halbbrückeninverter S2, S3 vorhandene Schaltelement S3 liegt im Vergleich zum Schaltelement S2 auf einem höheren Potential. Die Steuerschaltung C spricht das Schaltelement S3 über einen Optokoppler OC an. Dank des Optokopplers OC müssen keine weiteren Maßnahmen zur Potentialanpassung ergriffen werden. Das Bezugspotential RPA und das Bezugspotential RPB sind durch den Trennungskondensator C2 voneinander getrennt. Das Schaltelement S1 liegt auf dem Potential RPA und wird von der Steuerschaltung C auch über einen Optokoppler OC angesprochen. Potentialunterschiede zwischen den beiden Bezugspotentialen RPA und RPB spielen so bei der Ansteuerung des Schaltelementes S1 keine Rolle.

## Patentansprüche

1. Elektronisches Vorschaltgerät zum Betrieb einer Lampe (LA) mit einem Gleichrichter (D1-D4) zur Versorgung des elektronischen Vorschaltgerätes aus einer Wechselspannung, mit einem Inverter (S2, S3) zur Versorgung der Lampe (LA) mit einer hochfrequenten Wechselspannung, mit einem Zwischenkreiskondensator (C3) zur Gleichspannungsversorgung des Inverters (S1, S2) und mit einem SEPIC-Wandler (L1, C1, DS1, S1, L2) zum Laden des Zwischenkreiskondensators (C3), welcher - SEPIC-Wandler aufweist
- eine zwischen einen ersten Gleichrichterausgang und den Zwischenkreiskondensator (C3) geschaltete Serienschaltung aus einer ersten Spule (L1), einem SEPIC-Kondensator (C1) und einer Diode (DS1),
- ein an den Verbindungsknoten zwischen der ersten Spule (L1) und dem SEPIC-Kondensator (C1) parallel zu dem Zwischenkreiskondensator (C3) geschaltetes Schaltelement (S1)
- und eine an den Verbindungsknoten zwischen dem SEPIC-Kondensator (C1) und der Diode (DS1) parallel zu dem Zwischenkreiskondensator (C3) geschaltete zweite Spule (L2),
**dadurch gekennzeichnet, dass** das elektronische Vorschaltgerät einen zwischen das Schaltelement (S1) und die zweite Spule (L2), parallel zu dem SEPIC-Kondensator (C1), an einen zweiten Gleichrichterausgang angeschlossenen, geschalteten Trennungskondensator (C2) aufweist.

2. Elektronisches Vorschaltgerät nach Anspruch 1, bei dem der Gleichrichter (D1-D4) ein Vollbrückengleichrichter (D1-D4) ist.

3. Elektronisches Vorschaltgerät nach Anspruch 1 oder 2, bei dem die erste Spule (L1) und die zweite Spule (L2) des SEPIC-Wandlers (L1, C1, DS1, S1, L2) über einen gemeinsamen Kern (K) miteinander gekoppelt sind.

4. Elektronisches Vorschaltgerät nach einem der vorangehenden Ansprüche, bei dem die Kapazität des SEPIC-Kondensators (C1) um nicht mehr als 10% von der Kapazität des Trennungskondensators (C2) abweicht.

5. Elektronisches Vorschaltgerät nach einem der vorangehenden Ansprüche, bei dem zwischen den Wechselspannungsausgang (M) des Inverters (S2, S3) und eines der Versorgungspotentiale des Inverters (S2, S3) eine Serienschaltung aus
- einer Lampendrossel (L3),
- einem Koppelkondensator (C4)
- und zwei Lampenanschlüssen (KL1, KL2)
geschaltet ist, wobei der Koppelkondensator (C4) zwischen dem Wechselspannungsausgang (M) des Inverters (S2, S3) und dem wechselspannungsausgangsseitigen Anschluss (KL1) liegt.

6. Elektronisches Vorschaltgerät nach Anspruch 5 mit einem Resonanzkondensator (CR), welcher zu einer Serienschaltung aus dem Koppelkondensator (C4) und den Lampenanschlüssen (KL1, KL2) parallel geschaltet ist.

7. Elektronisches Vorschaltgerät nach einem der vorangehenden Ansprüche zum Betrieb einer Entladungslampe (LA), insbesondere einer Niederdruckentladungslampe (LA).

8. Elektronisches Vorschaltgerät nach einem der vorangehenden Ansprüche, bei dem der Inverter (S2, S3) zumindest ein Schaltelement (S2, S3) aufweist und eine Steuerschaltung (C) zur Ansteuerung der Schaltelemente (S1, S2, S3) vorgesehen ist, welche einen Optokoppler (OC) zur Potentialtrennung aufweist.

9. Lampensystem mit einem elektronischen Vorschaltgerät nach einem der Ansprüche 1 bis 8.

10. Lampensystem nach Anspruch 9 mit einer Serienschaltung aus zumindest zwei, gemeinsam mit dem Vorschaltgerät betreibbaren Lampen.
